# EUROPEAN PATENT APPLICATION

(11) **EP 1 968 049 A1**
(43) Date of publication of application: **10.09.2008**
(21) Application number: 08100036.6
(22) Date of filing: 03.01.2008
(51) Int. Cl.: G11B 7/007, G11B 7/135, G11B 19/12

(54) **Method of reproducing information from optical disc and optical disc reproducing apparatus using the same**

(30) Priority: 08.03.2007 KR 20070023197
(71) Applicant: Samsung Electronics Co., Ltd., Suwon-si, Gyeonggi-Do (KR)
(72) Inventor: Jeon, Young-sun 101-1605 Sindong-a-Apt., Seoul (KR); Kim, Jong-uk 301- Hyundai Heights Villa, Gyeonggi-do (KR); Park, Soo-han 511-901 Jinsan Maeul Samsung 5-cha Apt., Yongin-si Gyeonggi-do (KR); Yoo, Jang-hoon, Yangcheon-gu Seoul (KR); Yang, Jak-heun 201-1701 Woonam Firstvill Apt., Suwon-si Gyeonggi-do (KR)
(74) Representative: D'Halleweyn, Nele Veerle Trees Gertrudis

(57) **Abstract**

A method of reproducing information from an optical disc, and an optical disc reproducing apparatus using the method, including reproducing information from an optical disc having a plurality of regions with differing physical specifications, the information is read using optical beams having differing spot sizes in regions of the optical disc having differing physical specifications. The method enables the optical disc having the regions with differing physical specifications to stably reproduce information from all regions of the optical disc by minimizing regional reproduction performance differences caused in the reproduction process.

## Description

### CROSS-REFERENCE TO RELATED PATENT APPLICATIONS

This application claims the benefit of Korean Patent Application No. 2007-23197, filed March 8, 2007, in the Korean Intellectual Property Office, the disclosure of which is incorporated herein in its entirety by reference.

### BACKGROUND OF THE INVENTION

### 1. Field of the Invention

Aspects of the present invention relate to a method of reproducing information from an optical disc and an optical disc reproducing apparatus using the same, and more particularly, to a method of reproducing information from an optical disc having a plurality of regions with physical specifications that are different from each other, and an optical disc reproducing apparatus using the same.

### 2. Description of the Related Art

Recently disclosed high-density optical disc systems can be classified as employing a blu-ray disc method having a numerical aperture (NA) of 0.85 and a high definition digital video disc (HD-DVD) disc method having an NA of 0.65 according to the NAs of the high-density optical disc systems. An HD-DVD disc includes a system region and a data region that have differing pit structures as the optical disc is manufactured based on conventional DVD specifications. Thus, if the data region and the system region are reproduced using the same conditions, the data region and the system region exhibit differing reproducing characteristics. Hence, although the data region reproduces at an optimum state, the system region may not be properly reproduced.

As such, an HD-DVD disc having a plurality of regions with differing physical specifications may also exhibit similar problems associated with reproduction. For example, in terms of the compatibility with new specifications, if information is recorded in a data region in a high-density format and information is recorded in a system region in a conventional density format, the data region and the system region have physical specifications that are different from each other. As such, a conventional method of reproducing an optical disc and a conventional optical disc reproducing apparatus cannot optimally reproduce information from both the data region and the system region.

### SUMMARY OF THE INVENTION

To solve the above and/or other problems, aspects of the present invention provide a method of reproducing information from an optical disc having regions with differing physical specifications in an optimum state for each of the regions, and an optical disc reproducing apparatus using the same.

According to an aspect of the present invention, there is provided a method of reproducing information from an optical disc having a plurality of regions with differing physical specifications such that information is read using optical beams having differing spot sizes corresponding to each of the regions of the optical disc having differing physical specifications.

According to an aspect of the present invention, the regions of the optical disc having differing physical specifications have differing track pitch sizes. The regions of the optical disc having differing physical specifications may be a system region on which information related to the optical disc is recorded and a data region on which user data is recorded. If the system region has a track pitch size greater than that of the data region, the spot size of the optical beam irradiated onto the system region is larger than the spot size irradiated onto the data region.

According to an aspect of the present invention, the recognizing of the optical disc may include reading information related to the optical disc in the system region; and reading user data in the data region such that the spot size of the optical beam changes when the optical pick-up moves from the data region to the system region or from the system region to the data region.

According to an aspect of the present invention, there is provided an optical disc reproducing apparatus that reproduces information recorded in an optical disc having a plurality of regions with differing physical specifications, including an optical pick-up that irradiates an optical beam reflected by the optical disc; and a driving control unit that controls the optical pick-up so that the spot size of the optical beam irradiated onto each of the regions having differing physical specifications is different in each of the regions.

According to an aspect of the present invention, the optical pick-up may include a light source that emits an optical beam; an object lens that focuses the optical beam onto the optical disc; a collimating lens disposed between the light source and the object lens and installed to be moveable in an optical axis direction; and a collimating lens driving unit that controls the collimating lens such that the driving control unit controls the collimating lens driving unit to move the collimating lens in the optical axis direction so that the collimating lens controls the spot size of the optical beam focused on the optical disc.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a schematic drawing of an optical disc according to an aspect of the present invention;
FIGS. 2A and 2B are schematic drawings of regional recording faces of the optical disc of FIG. 1, according to an aspect of the present invention;
FIG. 3 is a schematic configuration of an optical disc reproducing apparatus according to an aspect of the present invention; and
FIG. 4 is a flowchart of a method of reproducing information from an optical disc according to an aspect of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

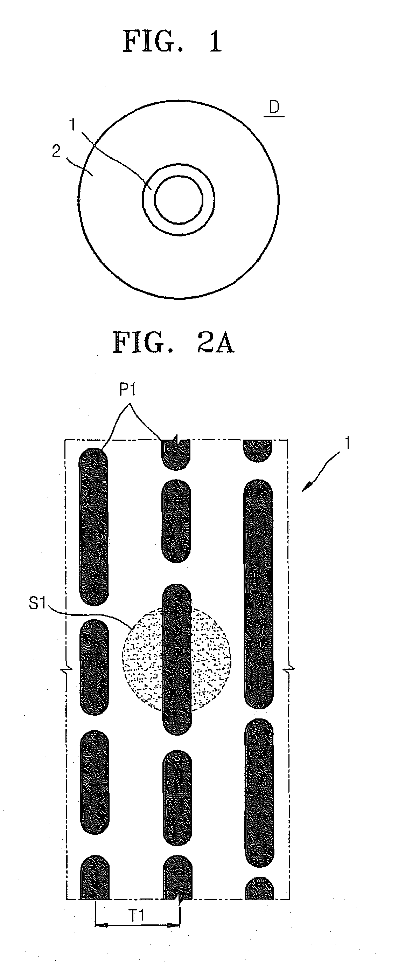

An optical disc employed according to aspects of the present invention will now be described. Aspects of the present invention apply to an optical disc having a plurality of regions with physical specifications that are different from each other. There are various specifications according to optical discs D such as CDs, DVDs, HD-DVDs, and BDs. The HD-DVDs are compatible with the DVDs since the HD-DVDs employ some of the conventional DVD specifications. Referring to FIG. 1, an optical disc D, such as an HD-DVD, conventionally includes a system region 1 and a data region 2. The system region 1 is a region in which information related to the disc is recorded, and the data region 2 is a region in which content to be used by the user is recorded. In the case of the HD-DVDs, for example, the system region 1 has a track pitch size of 0.74 µm, which is identical to that of the DVDs, and the data region 2 has a track pitch size of 0.40 µm. From among the HD-DVDs, the track pitch sizes of HD-DVD ROM, HD-DVD R, and HD-DVD RW are slightly different from each other according to their specifications. The HD-DVDs are an example of an optical disc having a plurality of regions with physical specifications that are different from each other; however, the optical disc is not limited to the HD-DVDs.

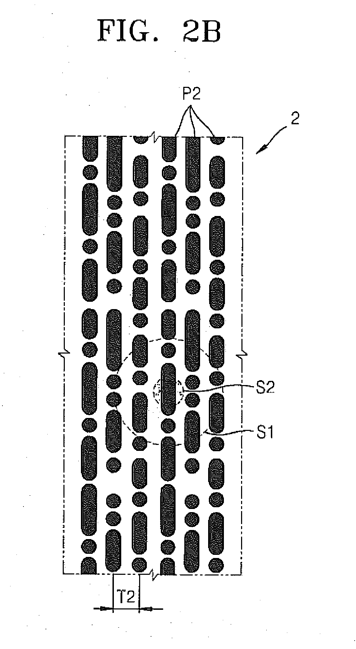

A method of reproducing information from an optical disc according to an aspect of the present invention will be described with reference to FIGS. 2A and 2B. FIGS 2A and 2B respectively are schematic drawings of a system region 1 and a data region 2 of an optical disc having regions with physical specifications that are different from each other. As shown in FIGS. 2A and 2B, in the system region 1, a gap between rows of pits P1 is greater than a gap between rows of pits P2 in the data region 2. Hence, the size of a track pitch T1 in the system region 1 is greater than the size of a track pitch T2 in the data region 2. In order to stably reproduce information from an overall region of the optical disc D, the sizes of beam spots S1 and S2 respectively in the system region 1 and the data region 2 must be optimized. If the size of the track pitch T1 in the system region 1 is greater than the size of the track pitch T2 in the data region 2, the size of the beam spot S1 irradiated on the system region 1 is greater than the size of the beam spot S2 irradiated on data region 2. The optimum sizes of the beam spots S1 and S1 respectively for the system region 1 and the data region 2 vary according to the sizes or depths of the pits P1 and P2 and the sizes of the track pitches T1 and T2. The optimum sizes of the beam spots S1 and S1 also vary according to a method of reading signals from an optical beam reflected by the optical disc. However, in order to have a correct tracking servo, the diameters of the beam spots S1 and S2 may respectively be greater than the sizes of the pits P1 and P2. Also, in order to minimize cross-talk of a signal that is to be reproduced, the diameters of the beam spots S1 and S2 may respectively be less than twice the sizes of the track pitches T1 and T2.

In the case of a conventional optical disc reproducing apparatus, an optical beam with a beam spot of the same size is irradiated on all regions of the same optical disc. That is, the reproducing in the data region 2 is performed using the beam spot S1 optimized in the system region 1, or the reproducing in the system region 1 is performed using the beam spot S2 optimized in the data region 2. However, the optimized beam spot S1 in the system region 1 may be inappropriate for the reproduction in data region 2. That is, in the case when the optimized beam spot S1 in the system region 1 is irradiated on the data region2, as depicted in FIG. 2B, the optimized beam spot S1 in the system region 1 irradiates multiple tracks in the data region 2. Thus a radio frequency (RF) signal or a servo error signal can be incorrect. Also, when the optimized beam spot S2 in the data region 2 is irradiated on the system region 1, the reading of the servo error is incorrect as the size of the beam spot S2 optimized in the data region 2 is less than the size of a beam spot required in the system region 1. However, as the optimized beam spots S1 and S2 are respectively used in the system region 1 and data region 2, correct reading can be performed in both the system region 1 and the data region 2.

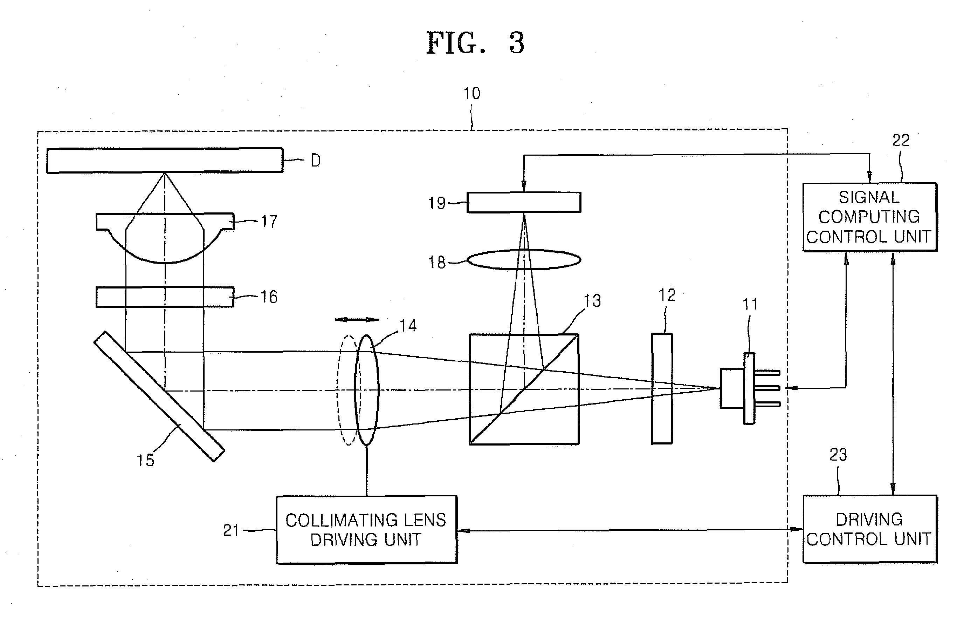

A configuration of an optical disc reproducing apparatus according to an aspect of the present invention will now be described with reference to FIG. 3. Referring to FIG. 3, the optical disc reproducing apparatus includes an optical pick-up 10 that detects signals from an optical disc D, a signal computing control unit 22 that processes signals detected by the optical pick-up 10, and a driving control unit 23 that controls the optical pick-up 10. The optical pick-up 10 is controlled such that the optimum sizes of beam spots (for example, beam spots S1 and S2 as described above) can respectively be irradiated on regions of the optical disc D.

The optical pick-up 10 irradiates a light beam onto the optical disc D and detects an electrical signal from the light beam reflected by the optical disc D. To do this, the optical pick-up 10 includes an optical path converter 13 to change a path along which the light beam proceeds, a collimating lens 14 that collimates the light beam, an object lens 17 that projects the collimated light beam received from the collimating lens 14 to the optical disc D after focusing the collimated light beam to a predetermined spot size, and an optical detector 19 that converts an optical signal reflected from the optical disc D to an electrical signal.

The optical pick-up 10 can further include a reflection mirror 15 that bends the optical path of the light beam to optimize the mounting of optical parts. Also, a ¼ wavelength plate 16 that changes polarization of incident light traveling to the object lens 17 can be included between the reflection mirror 15 and the object lens 17. The optical pick-up 10 can further include a grating 12 that diverges light emitted from a light source 11 into 0 order light (main light) and ± order light (sub-light) to detect a tracking error signal using a 3-beam method or a differential push-pull method. A reproducing signal can be obtained from the detected signal of the 0 order light reflected by the optical disc D, and the tracking error signal can be obtained by computing the detected signals of the 0 order light and ± order light. The optical pick-up 10 also includes an astigmatic lens 18 to generate an astigmatic aberration so that a focus error signal can be detected by an astigmatic method.

The collimating lens 14 is installed to be moveable in an optical axis direction to control the spot size of a light beam irradiated onto the optical disc D, and a collimating lens driving unit 21 for driving the collimating lens 14 is included in the optical pick-up 10. As such, the collimating lens 14 moves along a length of the optical beam (i.e., the optical axis direction) between the light source 11 and the object lens 17 to change the size of the optical beam irradiated onto the optical disc D. Although FIG. 3 illustrates the collimating lens 14 as being disposed between the light source 11 and the reflective mirror 15, the collimating lens 14 is not limited thereto. For example, the collimating lens 14 may be disposed between the reflective mirror 15 and the object lens 17; or, there may be multiple reflective mirrors 15 configured in the optical pick-up 10, depending upon the shape and structure thereof, so that the collimating lens 14 is disposed between two adjacent reflective mirrors 15 or between the light source 11 and the first of a series of reflective mirrors 15.

The light source 11 can emit light having a wavelength of 405 nm, which is in a blue-violet wavelength range that meets, for example, HD-DVD specifications. The object lens of 17 can have a numerical aperture that meets, for example, the HD-DVD specifications, that is a numerical aperture of approximately 0.65. In this way, when the light source 11 emits light in a blue-violet wavelength range and the object lens 17 has a numerical aperture of 0.65, the optical pick-up 10 can write and/or reproduce information to and/or from a high-density optical disc, particularly, an optical disc with HD-DVD specifications. The wavelength of the light source 11 and the numerical aperture of the object lens 17 may vary according to the kind of optical disc D. Also, in the optical pick-up 10, a light source module that emits light with a plurality of wavelengths (for example, a blue wavelength and a red wavelength) can be included as the light source 11, and the object lens 17 can be configured to achieve suitable effective numerical apertures for various cases, or can further include an additional member for controlling the effective numerical apertures.

The signal computing control unit 22 generates a focus error signal, a tracking error signal, a jitter value, and an RF signal in response to an electrical signal detected at the optical detector 19, and controls a laser diode driver (LDD) (not shown) that drives the light source 11 to control power of the optical beam emitted from the light source 11.

The driving control unit 23 controls a servo of the optical pick-up 10 in response to a signal generated by the signal computing control unit 22. In a process of reading information by irradiating an optical beam onto the optical disc D, when the optical pick-up 10 moves from a region to another region having a different physical specification, the driving control unit 23 controls the collimating lens driving unit 21 so that an optical beam having an optimum size can be irradiated onto the optical disc D.

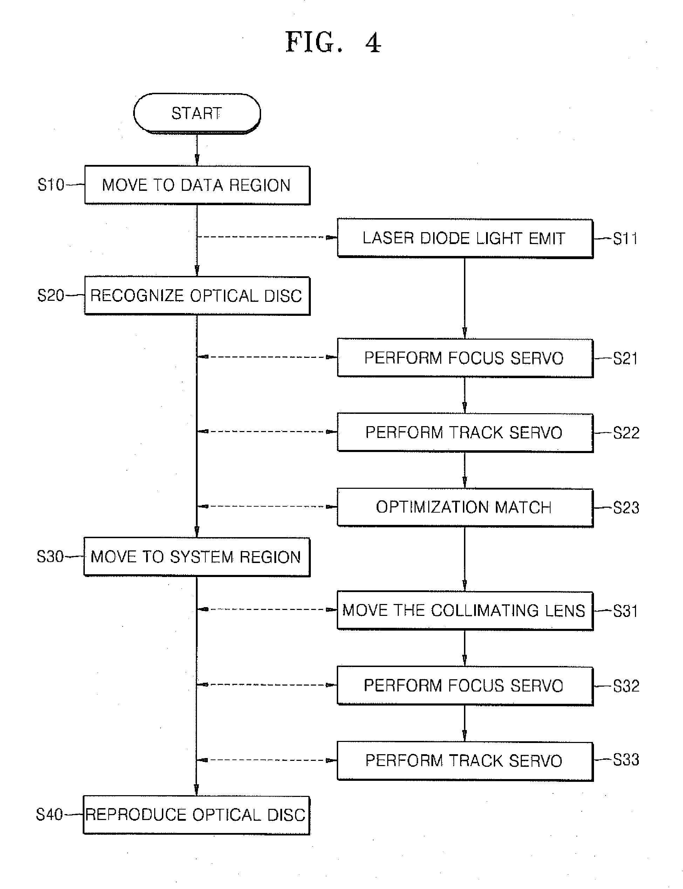

An operation of the optical disc reproducing apparatus according to aspects of the present invention will now be described with reference to FIGS. 1, 3, and 4. When the optical disc D is loaded in the optical disc reproducing apparatus, the optical disc reproducing apparatus performs a process to recognize the optical disc D. In order to recognize the optical disc D, the optical disc reproducing apparatus moves the optical pick-up 10 to the data region 2 of the optical disc D (S10).

Then, an optical beam, such as a laser diode, is irradiated onto the optical disc D by the light source 11 (S11), and the optical pick-up 10 reads physical parameters or optical parameters of the optical disc D, for example, a reflectance, an RF signal, or a push-pull signal from the optical beam reflected by the optical disc D. Since the reflectance, the RF signal, and the push-pull signal are specific according to specifications of each kind of optical disc D, the kind of optical disc D can be determined using the reflectance, the RF signal, and the push-pull signal (S20). However, the determination of the optical disc D is not limited to the above method. For example, the determination of the optical disc D can be achieved through a process of reading disc book type information included in a lead-in area of the optical disc D. Through the optical disc determination process (S20), the optical pick-up 10 determines whether the optical disc D has a system region 1 and a data region 2 having physical specifications that are different from each other or not.

Then, the optical disc reproducing apparatus performs an optimization matching operation (S23) while performing a focusing servo operation (S21) and/or a tracking servo operation (S22) according to the kind of optical disc D. Then, the optical disc reproducing apparatus moves the optical pick-up 10 to the system region 1 (S30). If the loaded optical disc D is determined as, for example, an HD-DVD in the recognize optical disc process (S20), a process for changing the spot size of an optical beam to be irradiated onto the optical disc D is performed (S31). That is, the driving control unit 23 controls the collimating lens driving unit 21 to move the collimating lens 14, so that the collimating lens 14 can irradiate an optimum spot size of the optical beam onto the system region 1.

The collimating lens 14 collimates the light beam by converging the light beams radiated from the light source 11. If the collimating lens 14 moves along an optical axis, a distance between the light source 11 that emits radiating light to the collimating lens 14 is changed. As the distance between the light source 11 and the collimating lens 14 changes, the diameter of the collimated light beam changes to thereby change the spot size of the optical beam focused onto the optical disc D through the object lens 17. Accordingly, an optical beam having an optimum spot size can be irradiated onto the system region 1 by moving the collimating lens 14.

Then, in the system region 1, after the focusing servo (S32) and the tracking servo (S33) operations are performed, information related to the optical disc D is read. Based on the information related to the optical disc D, the reproduction of information from the optical disc D is performed (S40).

If the optical pick-up 10 moves again to the data region 2 in order to reproduce user data recorded in the data region 2, the driving control unit 23 controls the collimating lens driving unit 21 to move the collimating lens 14, so that the collimating lens 14 can irradiate an optimum spot size of optical beam onto the data region 2. As such, the collimating lens 14 may be moved to change the diameter of the collimated light beam so as to produce the optimum spot size on the optical disc D.

As described above, when the optical pick-up 10 moves from one region to another region, and the other region has different physical specifications, an optimized spot size of the optical beam can be irradiated onto each of the regions by controlling the location of the collimating lens 14. Therefore, a stable reproduction of information from the optical disc D can be achieved. The spot size of the optical beam is controlled by moving the collimating lens 14. However, the spot size of the optical beam can be changed using various optical methods besides the above-described method.

As described above, the method of reproducing information from an optical disc according to aspects of the present invention, and the optical disc reproducing apparatus using the method of reproducing information from the optical disc enable stable reproduction from all regions of the optical disc by minimizing a regional reproduction performance difference caused in the process of reproducing information from the optical disc having a plurality of regions with differing physical specifications.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A method of reproducing information from an optical disc (D) having a plurality of regions with differing physical specifications, comprising:
recognizing the optical disc as having the plurality of regions (S20);
reading information from the optical disc with an optical beam having optimized spot sizes,
wherein at least two regions of the plurality of regions have different optimized spot sizes.

2. The method of claim 1, wherein the at least two regions of the optical disc having differing physical specifications have differing track pitch sizes (T1, T2).

3. The method of claim 2, wherein the at least two regions of the optical disc having differing physical specifications are a system region (1) on which information related to the optical disc is recorded and a data region (2) on which user data is recorded.

4. The method of claim 3, wherein, if the system region (1) has a track pitch size (T1) greater than a track pitch size (T2) of the data region (2), the optimized spot size (S1) of the optical beam irradiated onto the system region is greater than the optimized spot size (S2) of the optical beam irradiated onto the data region.

5. The method of any one of the previous claims, wherein the recognizing the optical disc as having the plurality of regions comprises:
reading information related to the optical disc in a system region (1); and
reading user data in a data region (2),
wherein the spot size of the optical beam changes when the optical pick-up moves from the data region to the system region or from the system region to the data region.

6. The method of claim 5, wherein the recognizing of the optical disc as having the plurality of regions is performed using physical or optical parameters in the data region (2).

7. The method of any one of the previous claims, wherein the recognizing of the optical disc further comprises reading disc book type information included in a lead-in area of the optical disc.

8. The method of any one of the previous claims, wherein the reading the information from the optical disc further comprises forming the optimized spot sizes by moving a collimating lens (14) closer to or farther away from a light source (11) which emits the optical beam to reflect off of the optical disc to read information therefrom.

9. An optical disc reproducing apparatus that reproduces information recorded on an optical disc (D) having a plurality of regions with differing physical specifications, comprising:
an optical pick-up (10) that irradiates an optical beam onto the optical disc and converts the optical beam reflected by the optical disc to an electrical signal; and
a driving control unit (23) that controls the optical pick-up to change a spot size of the optical beam irradiated according to each of the regions having differing physical specifications.

10. The optical disc reproducing apparatus of claim 9, wherein the optical pick-up (10) comprises:
a light source (11) that emits an optical beam;
an object lens (17) that focuses the optical beam onto the optical disc;
a collimating lens (14) disposed between the light source and the object lens, the collimating lens being moveable in an optical axis direction; and
a collimating lens driving unit (21) that controls a movement of the collimating lens in the optical axis direction,
wherein the driving control unit (23) controls the collimating lens driving unit (21) to move the collimating lens in the optical axis direction so that the collimating lens controls the spot size of the optical beam focused on the optical disc.

11. The optical disc reproducing apparatus of claim 9 or 10, suitable for reproducing information recorded on an optical disc having a plurality of regions with track pitch sizes (T1, T2) different from each other.

12. The optical disc reproducing apparatus of any one of the claims 9-11, suitable for reproducing information recorded on an optical disk having a plurality of regions including a system region (1) on which information related to the optical disc is recorded and a data region (2) on which user data is recorded, wherein
the driving control unit (23) controls the collimating lens driving unit to optimize the spot size of the optical beam irradiated on to the system region and the spot size of the optical beam irradiated onto the data region.

13. The optical disc reproducing apparatus of any one of the claims 9-12, wherein the optical pick-up further comprises:
an optical detector (19) to convert the reflected light beam to an electrical signal; and
an optical path converter (13) to bend the reflected light beam toward the optical detector.

14. The optical disc reproducing apparatus of any one of the claims 9-13, further comprising a signal computing control unit (22) to process signals read from the optical disc.

15. A method of reproducing information from an optical disc, the method comprising:
emitting an optical beam from a light source to an object lens, which focuses the optical beam on the optical disc (S11);
detecting a reflected optical beam as reflected by the optical disc;
determining an optimal spot size to read the information from the optical disc (S23); and
moving a collimating lens according to the determined optimal spot size (S31).

16. The method of claim 15, wherein the optimal spot size depends upon a region of the optical disc that is read.

17. A method of reproducing information from an optical disc, the method comprising:
determining an optimum spot size for a region of the optical disc (S23);
moving a collimating lens to form the optimum spot size for the region on the optical disc, the collimating lens being disposed along a path an optical beam emitted from a light source to read the information on the optical disc; and
reproducing the information from the optical disc (S40).
